# EUROPÄISCHE PATENTSCHRIFT

(11) **EP 1 036 893 B1**
(45) Veröffentlichungstag und Bekanntmachung des Hinweises auf die Patenterteilung: **18.02.2004**
(21) Anmeldenummer: 00105683.7
(22) Anmeldetag: 17.03.2000
(51) Int. Cl.: E04C 5/16, E04C 5/12, F16B 7/18

(54) **Schraubverbindung für Gewindestäbe**
Screwed connection for threaded rods
Raccord à vis pour tiges filetées

(30) Priorität: 17.03.1999 LU 90374
(43) Veröffentlichungstag der Anmeldung: 20.09.2000
(73) Patentinhaber: ARES S.A., 4801 Rodange (LU)
(72) Erfinder:
(74) Vertreter: Schmitt, Armand

(56) Entgegenhaltungen:
- EP-A- 0 867 578
- BE-A- 895 952
- DE-A- 1 609 867
- FR-A- 342 078
- GB-A- 213 333
- US-A- 4 127 354

## Beschreibung

Die vorliegende Erfindung betrifft generell eine Schraubverbindung für Gewindestäbe, die sich insbesondere für Muffenstöße und Endverankerungen bei Bewehrungsstäben eignet.

Vor ungefähr dreißig Jahren wurde unter dem Namen GEWI®-Muffenstoß, bzw. DYWIDAG®-Technik, ein neues Verbindungssystem für Bewehrungsstäbe bekannt. Bei diesem Verbindungssystem wird ein Betonrippenstahl eingesetzt, bei dem die Rippen in Form eines Gewindes über die ganze Stablänge aufgewalzt sind. Mit einer entsprechend ausgebildeten Gewindemuffe kann dann ein Schraubmuffenstoß zwischen zwei beliebig abgelängten GEWI®-Bewehrungsstäben hergestellt werden.

Das auf den Bewehrungsstab warm aufgewalzte Außengewinde kann allerdings nur mit relativ groben Toleranzen gefertigt werden. Hieraus ergibt sich, daß die Muffenverbindung bei Belastung einen nicht unwesentlichen axialen Schlupf aufweist. Die DIN 1045 schreibt vor, daß die zusätzlich zur elastischen Dehnung auftretende Verformung eines verschraubten Muffenstoß (Schlupf an beiden Muffenenden) unter Gebrauchslast höchstens 0,1 mm betragen darf.

Entsprechend der DYWIDAG®-Technik wird die erforderliche Schlupfbegrenzung dadurch erzielt, daß die Gewindemuffe an jedem Ende durch eine Kontermutter blockiert wird. Die beiden Kontermuttern werden hierbei mit Hilfe eines Drehmomentschlüssels mit einem Kontermoment angezogen, das in Funktion des Nenndurchmessers festgelegt ist, so daß die Schraubverbindung mit einer vorbestimmten Kraft vorgespannt wird. Solche Kontermuttern werden bei einem DYWIDAG®-Muffenstoß mit Zugbelastung, bzw. mit kombinierter Zug-Druckbelastung eingesetzt. Bei einem Muffenstoß mit ausschließlicher Druckbelastung kann auf die beiden Kontermuttern verzichtet werden. Die Stirnflächen der beiden Stabenden werden dann in der Muffe gegeneinander verspannt, so daß die Druckkräfte unmittelbar von Stabende zu Stabende übertragen werden.

Die beiden Kontermuttern verteuern den DYWIDAG®-Schraubmuffenstoß und erschweren außerdem seine Herstellung. In der Tat sind die Kontermuttern für den Drehmomentschlüssel nicht immer leicht zugänglich, und die zu erbringenden Drehmomente liegen bei einem Nenndurchmesser von 28 mm schon bei 950 Nm, d.h. an der Kraftgrenze eines durchschnittlichen Arbeiters. Eine Schraubverbindung mit den Merkmalen des Oberbegriffs des Anspruchs 1 ist vom CH 674 758 A bekannt.

Um die beiden Kontermuttern bei einem Schraubmuffenstoß gänzlich einzusparen, wird in der WO 98/10158 z.B. vorgeschlagen, das Gewindespiel durch Eingießen von Zementschlamm in die aufgeschraubte Gewindemuffe zu beseitigen. Dieses Verfahren ist, im Vergleich zu der DYWIDAG®-Technik mit Kontermuttern, jedoch relativ unzuverlässig. Es ist z.B. nicht gewährleistet, daß das Gewindespiel auf der Baustelle auch stets einwandfrei ausgegossen wird.

Es besteht folglich weiterhin ein Bedarf für eine Schraubverbindung zwischen einem Stabende mit grobem Außengewinde und einer Gewindemuffe, die auf das Außengewinde des Stabendes aufgeschraubt ist, in welcher der durch die groben Toleranzen des Außengewindes bedingte axiale Schlupf auf eine billige und einfache, jedoch trotzdem sichere Art und Weise reduziert ist. Diese Aufgabe wird erfindungsgemäß durch eine Schraubverbindung nach Anspruch 1 gelöst.

In einer erfindungsgemäßen Schraubverbindung wird ein Querkeil durch eine seitliche Öffnung der Gewindemuffe derart eingetrieben, daß er sich einerseits auf der Gewindemuffe und andererseits auf die im Bereich dieser Öffnung liegende Stirnfläche des Stabendes abstützt, um durch die Keilwirkung das Außen- und Innengewinde axial gegeneinander zu pressen. Es ist anzumerken, daß das Abstützen des Querkeils auf der Gewindemuffe, bzw. auf der Stirnfläche des Stabendes, entweder unmittelbar, d.h. durch direkten Kontakt zwischen Querkeil und Gewindemuffe, bzw. Querkeil und Stirnfläche des Stabendes, oder auch mittelbar, d.h. über ein oder mehrere zwischengeschaltete Teile, erfolgen kann. Durch Eintreiben eines Keils im wesentlichen senkrecht zur Längsachse der Gewindemuffe, werden die Flanken des Außengewindes am Stab mit großer Kraft gegen die gegenüberliegenden Flanken des Innengewindes an der Muffe gedrückt, so daß die Schraubverbindung ohne teure Kontermuttern sicher vorgespannt wird. Es ist weiterhin zu beachten, daß beim Eintreiben des Querkeils, im Gegensatz zum Anziehen der klassischen Kontermuttern, wesentlich kleinere Reibungswiderstände überwunden werden müssen, und auch keine zusätzlichen Torsionsspannungen in der Verbindung erzeugt werden. Um eine ausreichende Vorspannung der Schraubverbindung zu erzielen, muß der Querkeil lediglich um eine bestimmte Länge in die Gewindemuffe eingetrieben werden. Das Eintreiben dieses Querkeils benötigt hierbei weniger Platz und weniger Kraft als das Anziehen der klassischen Kontermuttern mit einem Drehmomentschlüssel.

Eine erfindungsgemäße Schraubverbindung eignet sich insbesondere für einen Muffenstoß zwischen zwei Stabenden, mit Zugbelastung, bzw. kombinierter Zug- und Druckbelastung. Bei einem solchen Schraubmuffenstoß zwischen zwei Stabenden könnte man natürlich jede der beiden Schraubverbindungen einzeln mit einem separaten Querkeil vorspannen. In einer vorteilhaften Ausgestaltung eines solchen Schraubmuffenstoßes, wird jedoch nur ein einziger Querkeil zum Vorspannen beider Verschraubungen benötigt. Die hierzu benutzte Gewindemuffe weist einen durchgehenden Kanal mit einem Innengewinde auf, wobei die zu verbindenden Stabenden derart in die Gewindemuffe eingeschraubt sind, daß sich ihre Stirnflächen in der Gewindemuffe axial gegenüberliegen. Ein einziger Querkeil wird dann durch die seitliche Öffnung der Gewindemuffe zwischen die beiden Stirnflächen der Stabenden eingetrieben, wobei er sich auf den beiden gegenüberliegenden Stimflächen abstützt, um durch die Keilwirkung das Außengewinde der beiden Stabenden jeweils axial gegen das Innengewinde der Gewindemuffe zu pressen und so beide Schraubverbindungen gleichzeitig vorzuspannen.

Eine erfindungsgemäße Schraubverbindung eignet sich ebenfalls ausgezeichnet für die Befestigung eines Endankers an einem Stabende mit aufgewalztem Außengewinde. Eine auf das Stabende aufgeschraubte Gewindemuffe, bzw. Hutmutter, bildet hierbei den Endanker aus. Der Querkeil wird durch eine seitliche Öffnung der Gewindemuffe, bzw. Hutmutter, derart eingetrieben, daß er sich einerseits auf der Stirnfläche des Stabendes und andererseits auf der Gewindemuffe, bzw. Hutmutter, abstützt, um durch die Keilwirkung das Außen- und Innengewinde axial gegeneinander zu pressen und so die Schraubverbindung vorzuspannen.

Der Querkeil ist natürlich vorzugsweise selbsthemmend ausgebildet, so daß er nicht gesichert werden muß. Er kann einteilig ausgebildet sein, ist jedoch vorzugsweise ein Doppelkeil oder noch besser ein Dreifachkeil mit parallelen Abstützflächen. Ein solcher Dreifachkeil kann z.B. vorteilhaft als einteiliger Schlagdübel ausgebildet sein. Eine oder mehrere Markierungen am Querkeil ermöglichen es die Eintreibtiefe zu bestimmen.

Die Öffnung für den Querkeil in der Gewindemuffe ist vorteilhaft als Führungsschlitz ausgebildet, in welchem der Querkeil seitlich geführt ist. Damit der Querkeil bei unterschiedlichen Winkelstellungen der Gewindemuffe leichter eingetrieben werden kann, weist die Gewindemuffe vorteilhaft mindestens zwei in Umfangrichtung versetzte Öffnungen für den Querkeil auf.

Im folgenden werden nun verschiedene Ausgestaltungsbeispiele der Erfindung anhand der beiliegenden Figuren beschrieben. Es zeigen:
- Fig. 1: eine Seitenansicht, teilweise geschnitten, eines erfindungsgemäßen Muffenstoßes;
- Fig. 2: einen Querschnitt entlang der Schnitlinie 2-2' durch den Muffenstoß der Figur 1;
- Fig. 3: eine Draufsicht auf den Muffenstoß der Figur 1;
- Fig. 4: eine Seitenansicht einer alternativen Ausgestaltung eines Querkeils;
- Fig. 5: eine Seitenansicht, teilweise geschnitten, einer erfindungsgemäßen Endverankerung;
- Fig. 6: ein Zug-Dehnungs-Diagramm, in dem das Dehnungsverhalten eines erfindungsgemäßen Muffenstoßes dargestellt ist.

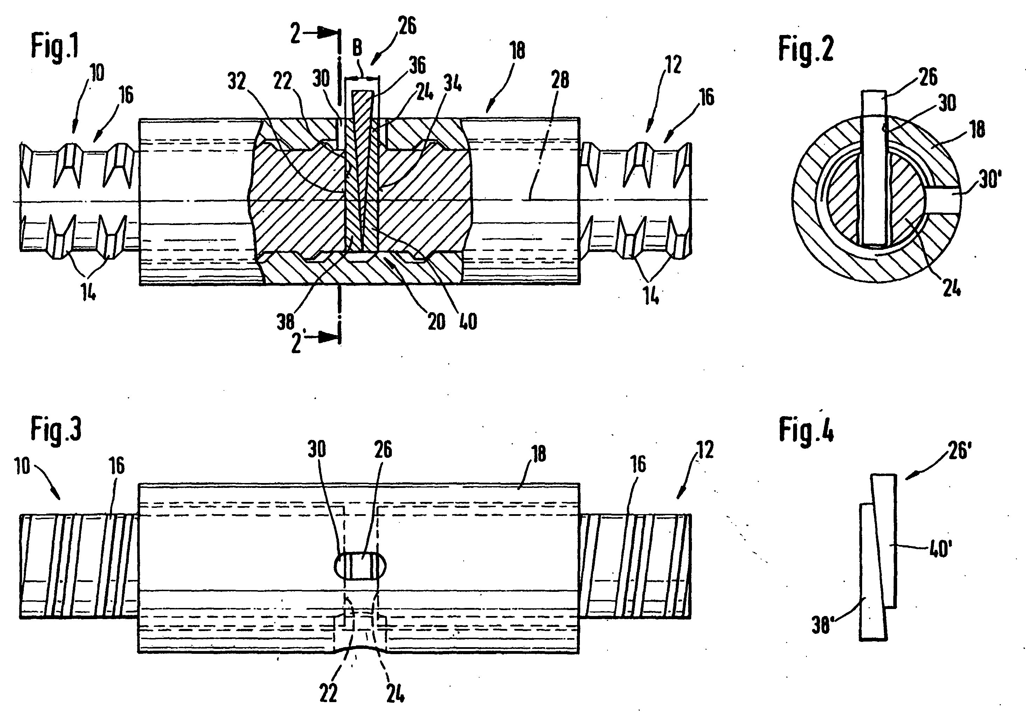

Der in der Figur 1 gezeigte Muffenstoß verbindet die Enden von zwei gegenüberliegenden Bewehrungsstäben 10, 12. Beide Bewehrungsstäbe 10, 12 haben Rippen 14 die in Form eines Außengewindes 16 aufgewalzt sind. Mit dem Bezugszeichen 18 ist eine Gewindemuffe bezeichnet. Letztere weist in Längsrichtung einen Durchgangskanal auf, in den ein Innengewinde 20 eingearbeitet ist. Die beiden Stabenden 10, 12 sind derart in die Gewindemuffe 18 geschraubt, daß sich ihre Stirnflächen 22, 24 in dem Durchgangskanal der Gewindemuffe 18 axial gegenüberliegen.

Da das Außengewinde 16 der Stäbe 10, 12 nur mit relativ groben Toleranzen gewalzt werden kann, entsprechend der DIN 1045 der Schlupf im Muffenstoß unter Gebrauchslast jedoch nicht größer als 0,1 mm sein darf, muß eine Schlupfbegrenzung vorgesehen sein.

Die erforderliche Schlupfbegrenzung wird in dem erfindungsgemäßen Muffenstoß dadurch erreicht, daß ein Querkeil 26 durch eine seitliche Öffnung 30 der Gewindemuffe 18 zwischen die beiden Stirnflächen 22, 24 der Stabenden 10, 12 eingetrieben ist. Dieser Querkeil 26 stützt sich auf den beiden gegenüberliegenden Stirnflächen 22, 24 ab, um durch die Keilwirkung die beiden Stabenden in der Gewindemuffe 18 auseinanderzudrücken und so die Gewindezähne das Außengewindes 16 eines jeden der beiden Stabenden 10, 12, mit großer Kraft axial gegen die Gewindezähne des lnnnengewindes 20 zu pressen. Anders ausgedrückt, der Querkeil 26 stützt sich mittelbar über den Stab 12 auf der Gewindemuffe 18 ab, um durch die Keilwirkung die Gewindezähne das Außengewindes 16 des Stabes 10 axial gegen die Gewindezähne des Innnengewindes 20 zu pressen. Noch anders ausgedrückt, der Querkeil 26 stützt sich mittelbar über den Stab 10 auf der Gewindemuffe 18 ab, um durch die Keilwirkung die Gewindezähne das Außengewindes 16 des Stabes 12 axial gegen die Gewindezähne des Innnengewindes 20 zu pressen.

Bei Zugbelastung des vorgespannten Muffenstoßes werden die Zugspannungen demnach ohne axiales Spiel über die Gewindemuffe 18 von Stab zu Stab übertragen. Bei Druckbelastung des vorgespannten Muffenstoßes werden die Druckspannungen ohne axiales Spiel über den Querkeil 26 unmittelbar von Stab zu Stab übertragen.

Der in den Figuren 1 bis 3 gezeigte Querkeil 26 ist ein Dreifachkeil der sich mit parallelen Abstützflächen 32, 34 auf den rechtwinklig zur Längsachse geschnittenen Stirnflächen 22, 24 der Stäbe 10, 12 abstützt. Er wird durch drei komplementäre Keilelemente 36, 38, 40 ausgebildet, die zu einer Art Einschlagdübel zusammengefaßt sind. Die drei Keilelemente 36, 38, 40 können z.B. durch eine dünne Plastikhülse (nicht gezeigt) oder eine Klebfolie, bzw. ein Kunstharz zusammengehalten werden. Durch Einschlagen des mittleren Keilelements 36 werden die beiden seitlichen Keilelemente 38, 48 zwischen den Stirnflächen 22, 24 der Stäbe 10, 12 auseinandergedrückt. Eine oder mehrere Markierungen am mittleren Keilelement ermöglichen es die Eintreibtiefe eindeutig zu bestimmen.

Wie unter anderem aus der Figur 3 ersichtlich, ist die Öffnung 30 in der Gewindemuffe 18 als Führungsschlitz für den Querkeil 26 ausgebildet, in dem der Querkeil 26 seitlich geführt ist. Aus der Figur 2 ist zu entnehmen, daß die Gewindemuffe 18 einen zweiten Führungsschlitz 30' für den Querkeil 26 aufweist, der zum ersten Führungsschlitz 30 in Umfangrichtung um zirka 90° versetzt ist. Je nach Winkelstellungen der Gewindemuffe 18, ist entweder der Führungsschlitz 30 oder der Führungsschlitz 30' für das Eintreiben des Querkeils 26 leichter zugänglich.

Figur 4 zeigt eine Ausgestaltung des Querkeils als Doppelkeil 26', bestehend aus zwei komplementären Keilelementen 38', 40'. Der Doppelkeil 26' hat gegenüber dem Dreifachkeil 26 der Figuren 1 bis 3 jedoch den Nachteil, daß zumindest eines der beiden Keilelemente 38', 40' beim Einschlagen unmittelbar an der Stirnfläche 22, 24 eines der Stäbe 10, 12 vorbeigleiten muß. Hierbei besteht die Gefahr, daß dieses Keilelement 38', 40' beim Einschlagen eine Furche in die weichere Stirnfläche 22, 24 gräbt, wodurch die erzielte Vorspannung natürlich vermindert wird. Beim Dreifachkeil 26 der Figuren 1 bis 3 ist diese Gefahr weitgehend ausgeschlossen, da das einzuschlagende mittlere Keilelement 36 zwischen den äußeren Keilelementen 38, 40 geführt ist und nicht unmittelbar mit den Stirnflächen 22, 24 der Stäbe 10, 12 in Kontakt steht. Es bleibt anzumerken, daß der Doppelkeil aus Figur 4 auch durch zwei sich gegenüberliegende Öffnungen in der Gewindemuffe 18, also von zwei Seiten aus, eingeschlagen werden könnte.

Der in den Figuren 1 bis 3 gezeigte Muffenstoß kann z.B. wie folgt hergestellt werden. Die Gewindemuffe 18 wird gänzlich auf den ersten Stab 10 aufgeschraubt. Der zweite Stab 12 wird anschließend in axialer Verlängerung des Stabs 10, derart angeordnet, daß die axiale Distanz zwischen den beiden Stirnflächen 22, 24 leicht größer als die initiale Breite "B" des Querkeils 26 ist. Auf der Baustelle verfügt man vorteilhaft über eine entsprechende Lehre um diesen Abstand einzustellen. Anschließend wird die Muffe über den Stoß zurückgeschraubt, bis die Stirnfläche 22 des Stabs 10 in der Öffnung 30 der Gewindemuffe 18 sichtbar wird (die Stirnfläche 24 des Stabs 12 liegt noch verdeckt rechts von der Öffnung 30). Der Dreifachkeil 26 wird nun von Hand in die Öffnung 30 eingesteckt. Sein Fußende soll hierbei, diametral gegenüber der Öffnung 30, an der inneren Wand der Gewindemuffe 18 aufliegen. Hier kann ggf. ein schlitzförmiger Sitz für das Fußende des Dreifachkeils 26 in die Wand der Gewindemuffe 18 eingearbeitet sein. Anschließend wird der Stab 12 weiter in die Gewindemuffe 18 eingeschraubt, bis seine Stirnfläche 12 an dem Querkeil 26 anliegt. Der initiale Abstand zwischen den beiden Stirnflächen 22, 24 sollte vorzugsweise derart gewählt sein, daß eine Viertelumdrehung des Stabs 12 ausreicht um den Kontakt mit dem Querkeil 26 herzustellen. Das Einschrauben des Stabs 12 bewirkt u.a. auch, daß das axiale Spiel zwischen den Zahnflanken des Außen- und Innengewindes 16, 20 beim linken Stab 10 nach rechts und beim rechten Stab 12 nach links verteilt wird. Durch die Öffnung 30 der Gewindemuffe 18 wird nun kontrolliert ob die beiden Stirnflächen 22, 24 tatsächlich auch bündig am Querkeil 26 anliegen, bevor das mittlere Keilelement 26 bis zur entsprechenden Markierung eingeschlagen wird. Die Breite "B" des Querkeils 26 vergrößert sich, so daß die beiden Stäbe 10, 12 auseinandergedrückt werden. Hierbei werden die rechten Zahnflanken des Stabs 12 mit großer Kraft gegen die linken Zahnflanken der Gewindemuffe 18, und die linken Zahnflanken des Stabs 10 mit großer Kraft gegen die rechten Zahnflanken der Gewindemuffe 18 angedrückt. In anderen Worten, die Schraubverbindung wird durch Eintreiben des Querkeils 26 vorgespannt. Die Einschlagtiefe des mittleren Keilelements 26 bestimmt hierbei die mit dem Querkeil 26 erzielte Vorspannlast.

Bei Unregelmäßigkeiten im aufgewalzten Außengewinde 16 der Stäbe 10, 12, stehen vor dem Vorspannen nur einige wenige Gewindezähne des Außengewindes 16 in Kontakt mit Gewindezähnen des Innengewindes 20 und die Kontaktfläche der Gewindezähne ist relativ reduziert. Beim Vorspannen kommt es zu plastischen Verformungen der weicheren Gewindezähne der Gewindemuffe 18, wodurch weitere Gewindezähne des Außengewindes 16 in Kontakt mit Gewindezähnen des Innengewindes 20 kommen und die Kontaktfläche der Gewindezähne sich insgesamt vergrößert. In anderen Worten, es werden bei dem Vorspannen einzelne Gewindezähne und Kontaktflächen plastisch verformt, damit von Anfang an eine größere Übertragungsfläche zwischen Außen- und Innengewinde für die Übertragung der Gebrauchslast in der Schraubverbindung zu Verfügung steht. Hierdurch wird gewährleistet, daß beim Anlegen der Gebrauchslast hauptsächlich elastische, d.h. reversible, Verformungen in der Schraubverbindung stattfinden..

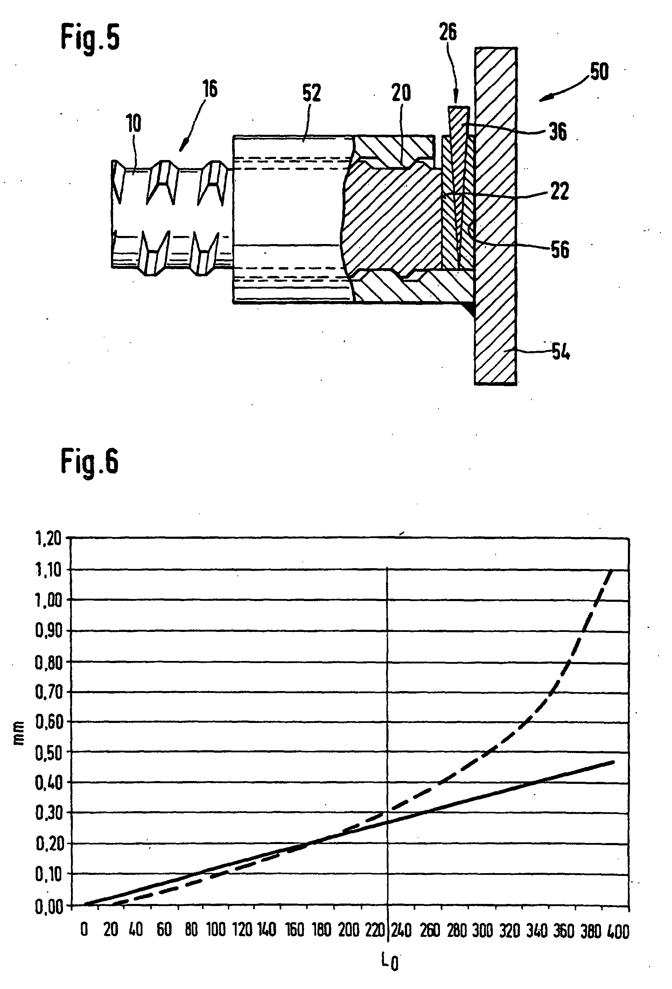

In Figur 5 ist die Befestigung eines Endankers 50 mit einer erfindungsgemäßen Schraubverbindung an einem Stabende 10 gezeigt. Der Endanker 50 besteht im wesentlichen aus einer Gewindemuffe 52, bzw. Hutmutter, auf die stirnseitig eine Ankerplatte 54 aufgeschweißt ist. Der Querkeil 26 ist senkrecht zur Längsachse der Gewindemuffe 52 durch eine seitliche Öffnung 30 der Gewindemuffe 52 derart eingetrieben, daß er sich einerseits auf der Stirnfläche 22 des Stabendes 10 und andererseits, über eine gegenüberliegende Abstützfläche 56, auf der Gewindemuffe 52 abstützt, um durch die Keilwirkung das Außen- und Innengewinde 16, 20 axial gegeneinander zu pressen. In der gezeigten Ausführung wird die Abstützfläche 56 des Querkeils 26 durch die Ankerplatte 54 der Gewindemuffe 52 ausgebildet.

Die Befestigung des Endankers 50 kann vorteilhaft wie folgt vorgenommen werden. Der Endanker 50 wird mit eingesetztem Querkeil 26 auf den Stab 10 aufgeschraubt, bis die Stirnfläche 22 des Stabs 10 an dem Querkeil 26 aufliegt und letzteren gegen die Abstützfläche 56 andrückt. Durch die Öffnung 30 kann eine Sichtkontrolle der Lage des Querkeils 26 vorgenommen werden. Anschließend wird das mittlere Keilelement 36 des Querkeils 26 eingeschlagen um die Schraubverbindung wie bei dem oben beschriebenen Muffenstoß vorzuspannen.

In Figur 6 ist in einem Diagramm das Dehnungsverhalten eines erfindungsgemäßen Muffenstoßes nach Figur 1 unter Zuglast dargestellt. Der Nenndurchmesser der verbundenen Gewindestäbe 10, 12 ist 32 mm. Im Diagramm stellt die gestrichelte Kurve die lastabhängige Dehnung des erfindungsgemäßen Muffenstoßes dar. Die durchgezogene Gerade stellt vergleichsweise die lastabhängige Dehnung eines durchgehenden Gewindestabs mit einem Nenndurchmesser von 32 mm dar. Anfangs ist bei gleicher Last die Dehnung der Muffenverbindung leicht geringer als die Dehnung des Gewindestabs, da der Materialquerschnitt in der Gewindemuffe 18 größer ist. Mit steigender Zugbelastung macht sich jedoch langsam eine plastische Verformung der Gewindezähne der Gewindemuffe 18 bemerkbar, so daß die Dehnungskurve der Muffenverbindung langsam steiler wird. Bei einer Gebrauchslast Lo von 230 kN ist der erfindungsgemäße Muffenstoß jedoch nur zirka 0,03 mm länger als der entsprechende Vergleichsstab. Dieser Schlupfwert von 0,03 mm ist noch wesentlich kleiner als der in der DIN 1045 vorgegebene Maximalwert von 0,1 mm. Erst bei einer Beanspruchung von zirka 280 kN wird ein Schlupfwert größer als 0,1 mm erreicht.

Es bleibt anzumerken, daß zum Vorspannen der erfindungsgemäßen Verschraubung mit Nennweite 32 mm, der Querkeil mühelos mit einem 0,5 kg Hammer eingeschlagen werden kann. Bei der Benutzung von Kontermutternmüßte man ein Kontermoment von mehr als 1600 Nm erbringen, um in etwa die gleiche Vorspannung zu gewährleisten. Ein Kontermoment dieser Größe ist hingegen kaum noch mit einem manuellen Drehmomentschiüssel zu erzeugen.

## Patentansprüche

1. Schraubverbindung umfassend:
mindestens ein Stabende (10, 12) mit einem Außengewinde (16); und
eine Gewindemuffe (18) mit einem Innengewinde (20) die auf das Außengewinde (16) des Stabendes (10, 12) aufgeschraubt ist;
**gekennzeichnet durch**
einen Querkeil (26) der **durch** eine seitliche Öffnung (30) der Gewindemuffe (18) derart eingetrieben ist, daß er sich einerseits auf der Gewindemuffe (18) und andererseits auf der Stirnfläche (22, 24) des Stabendes (10, 12) abstützt, um **durch** die Keilwirkung das Außen- und Innengewinde (16, 20) axial gegeneinander zu pressen.

2. Schraubverbindung nach Anspruch 1, **dadurch gekennzeichnet, daß** der Querkeil ein Doppelkeil (26') mit parallelen Abstützflächen ist.

3. Schraubverbindung nach Anspruch 1, **dadurch gekennzeichnet, daß** der Querkeil ein Dreifachkeil (26) mit parallelen Abstützflächen ist.

4. Schraubverbindung nach Anspruch 3, **dadurch gekennzeichnet, daß** der Dreifachkeil (26) als einteiliger Einschlagdübel ausgebildet ist

5. Schraubverbindung nach einem der Ansprüche 1 bis 4, **dadurch gekennzeichnet, daß** der Querkeil (26) eine Markierung für die Eintreibtiefe aufweist.

6. Schraubverbindung nach einem der Ansprüche 1 bis 5, **dadurch gekennzeichnet, daß** die Öffnung der Gewindemuffe (18) als Führungsschlitz (30) ausgebildet ist, in welchem der Querkeil (26) seitlich geführt ist.

7. Schraubverbindung nach einem der Ansprüche 1 bis 6, **dadurch gekennzeichnet, daß** die Gewindemuffe (18) mindestens zwei in Umfangrichtung versetzte Öffnungen (30, 30') für einen Querkeil (26) aufweist.

8. Schraubverbindung nach einem der Ansprüche 1 bis 7, **dadurch gekennzeichnet, daß** das Stabende (10, 12) Teil eines Bewehrungsstabs ist, über dessen gesamte Länge ein Außengewinde (16) aufgewalzt ist.

9. Muffenstoß umfassend eine Schraubverbindung nach einem der Ansprüche 1 bis 8, wobei:
die Gewindemuffe (18) einen durchgehenden Kanal mit einem Innengewinde (20) aufweist;
ein erstes und ein zweites Stabende (10, 12) mit aufgewalztem Außengewinde (16) derart mit der Gewindemuffe (18) verschraubt sind, daß sich ihre Stirnflächen (22, 24) in der Gewindemuffe (18) axial gegenüberliegen; und
der Querkeil (26) in die seitliche Öffnung (30) der Gewindemuffe (18) zwischen die beiden Stirnflächen (22, 24) der Stabenden (10, 12) derart eingetrieben ist, daß er sich auf diesen beiden Stirnflächen (10, 12) abstützt, um durch die Keilwirkung das Außengewinde (16) der beiden Stabenden (10, 12) jeweils axial gegen das Innengewinde (20) der Gewindemuffe (18) zu pressen.

10. Endverankerung umfassend eine Schraubverbindung nach einem der Ansprüche 1 bis 8, wobei:
die auf das Außengewinde (16) des Stabendes (10) aufgeschraubte Gewindemuffe (52) einen Endanker (50) ausbildet; und
der Querkeil (26) in die seitliche Öffnung (30) der Gewindemuffe (52) derart eingetrieben ist, daß er sich einerseits auf der Stimfläche (22) des Stabendes (10) und andererseits auf der Gewindemuffe (52) abstützt, um durch die Keilwirkung das Außen- und Innengewinde (16, 20) axial gegeneinander zu pressen.

## Claims

1. Screwed connection comprising:
at least one rod end (10, 12) with an external thread (16); and
a threaded sleeve (18) with an internal thread (20), which is screwed on to the external thread (16) of the rod end (10, 12),
**characterized by**
a cotter (26), which is driven in through a lateral opening (30) in the threaded sleeve (18) in such a way that it bears on the threaded sleeve (18) and on the end face (22, 24) of the rod end (10, 12) in order to press the external and internal threads (16, 20) axially against each other by the wedge effect.

2. Screwed connection according to Claim 1, **characterized in that** the cotter is a double wedge (26') with parallel bearing surfaces.

3. Screwed connection according to Claim 1, **characterized in that** the cotter is a triple wedge (26) with parallel bearing surfaces.

4. Screwed connection according to Claim 3, **characterized in that** the triple wedge (26) is designed as a one-piece drive-in dowel.

5. Screwed connection according to one of Claims 1 to 4, **characterized in that** the cotter (26) has a mark for the drive-in depth.

6. Screwed connection according to one of Claims 1 to 5, **characterized in that** the opening of the threaded sleeve (18) is designed as a guide slot (30), in which the cotter (26) is guided laterally.

7. Screwed connection according to one of Claims 1 to 6, **characterized in that** the threaded sleeve (18) has at least two openings (30, 30') for a cotter (26) offset in the circumferential direction.

8. Screwed connection according to one of Claims 1 to 7, **characterized in that** the rod end (10, 12) is part of a reinforcing rod, with an external thread (16) rolled thereon over its entire length.

9. Bell butt joint comprising a screwed connection according to one of Claims 1 to 8, in which:
the threaded sleeve (18) has a continuous channel with an internal thread (20);
a first and a second rod end (10, 12) with rolled-on external thread (16) are screwed to the threaded sleeve (18) in such a way that their end faces (22, 24) are axially opposite each other in the threaded sleeve (18); and
the cotter (26) is driven into the lateral opening (30) of the threaded sleeve (18) between the two end faces (22, 24) of the rod ends (10, 12) in such a way that it bears on these two end faces (10, 12) in order to press the external thread (16) of the two rod ends (10, 12) axially against the internal thread (20) of the threaded sleeve (18) by the wedge effect.

10. End anchorage comprising a screwed connection according to one of Claims 1 to 8, in which:
the threaded sleeve (52) screwed onto the external thread (16) of the rod end (10) forms an end anchor (50); and
the cotter (26) is driven into the lateral opening (30) of the threaded sleeve (52) in such a way that it bears both on the end face (22) of the rod end (10) and on the threaded sleeve (52) in order to press the external and internal threads (16, 20) axially against each other by the wedge effect.

## Revendications

1. Raccord à vis comprenant :
au moins une extrémité de tige (10, 12) munie d'un filet extérieur (16) ; et
un manchon taraudé (18) muni d'un filet intérieur (20), ce manchon taraudé étant vissé sur le filet extérieur (16) de l'extrémité de tige (10, 12) ;
**caractérisé par**
une clavette transversale (26) qui est enfoncée à travers un orifice latéral (30) du manchon taraudé (18), de telle manière qu'elle s'appuie d'une part sur le manchon taraudé (18) et d'autre part sur la surface frontale (22, 24) de l'extrémité de tige (10, 12) afin de presser le filet extérieur et le filet intérieur (16, 20) axialement l'un contre l'autre par l'effet de clavetage.

2. Raccord à vis selon la revendication 1, **caractérisé en ce que** la clavette transversale est une clavette double (26') à surfaces d'appui parallèles.

3. Raccord à vis selon la revendication 1, **caractérisé en ce que** la clavette transversale est une clavette triple (26) à surfaces d'appui parallèles.

4. Raccord à vis selon la revendication 3, **caractérisé en ce que** la clavette triple (26) est exécutée comme une cheville à enfoncer d'une seule pièce.

5. Raccord à vis selon l'une quelconque des revendications 1 à 4, **caractérisé en ce que** la clavette transversale (26) présente un repère pour la profondeur d'enfoncement.

6. Raccord à vis selon l'une quelconque des revendications 1 à 5, **caractérisé en ce que** l'orifice du manchon taraudé (18) est exécuté comme une fente de guidage (30), dans laquelle la clavette transversale (26) est guidée latéralement.

7. Raccord à vis selon l'une quelconque des revendications 1 à 6, **caractérisé en ce que** le manchon taraudé (18) présente au moins deux orifices (30, 30'), décalés dans le sens circonférentiel, pour une clavette transversale (26).

8. Raccord à vis selon l'une quelconque des revendications 1 à 7, **caractérisé en ce que** l'extrémité de tige (10, 12) fait partie d'une barre d'armature, sur la longueur totale de laquelle est roulé un filet extérieur (16).

9. Joint bout à bout à manchon, comprenant un raccord à vis selon l'une quelconque des revendications 1 à 8 :
le manchon taraudé (18) présentant un canal continu muni d'un filet intérieur (20) ;
une première et une deuxième extrémités de tige (10, 12) munies d'un filet extérieur laminé (16) étant vissées avec le manchon taraudé (18) de telle manière que leurs surfaces frontales (22, 24) sont axialement opposées dans le manchon taraudé (18) ; et
la clavette transversale (26) étant enfoncée dans l'orifice latéral (30) du manchon taraudé (18) entre les deux surfaces frontales (22, 24) des extrémités de tige (10, 12) de telle manière qu'elle s'appuie sur ces deux surfaces frontales (10, 12) afin de presser le filet extérieur (16) des deux extrémités de tige (10, 12) respectivement axialement contre le filet intérieur (20) du manchon taraudé (18), par l'effet de clavetage.

10. Ancrage terminal comprenant un raccord à vis selon l'une quelconque des revendications 1 à 8 :
le manchon taraudé (52) vissé sur le filet extérieur (16) de l'extrémité de tige (10) formant un boulon d'ancrage terminal (50) ; et
la clavette transversale (26) étant enfoncée dans l'orifice latéral (30) du manchon taraudé (52), de telle manière qu'elle s'appuie d'une part sur la surface frontale (22) de l'extrémité de tige (10) et d'autre part sur le manchon taraudé (52) afin de presser le filet extérieur et le filet intérieur (16, 20) axialement l'un contre l'autre par l'effet de clavetage.
